# EUROPEAN PATENT SPECIFICATION

(11) **EP 3 894 823 B1**
(45) Date of publication and mention of the grant of the patent: **30.09.2026**
(21) Application number: 18830407.5
(22) Date of filing: 11.12.2018
(51) Int. Cl.: G01M 11/06, B60Q 1/00

(54) **METHOD AND SYSTEM FOR VISUALIZING DIFFERENT LIGHTING CHARACTERISTICS OF A LIGHTING DEVICE OF A MOTOR VEHICLE**
VERFAHREN UND SYSTEM ZUR VISUALISIERUNG UNTERSCHIEDLICHER BELEUCHTUNGSEIGENSCHAFTEN EINER BELEUCHTUNGSVORRICHTUNG EINES KRAFTFAHRZEUGS
PROCÉDÉ ET SYSTÈME DE VISUALISATION DE DIFFÉRENTES CARACTÉRISTIQUES D'ÉCLAIRAGE D'UN DISPOSITIF D'ÉCLAIRAGE D'UN VÉHICULE AUTOMOBILE

(43) Date of publication of application: 20.10.2021
(73) Proprietor: HELLA GmbH & Co. KGaA, 59552 Lippstadt (DE)
(72) Inventor: HÜSTER, Christian, 33154 Salzkotten (DE); KNOOP, Sarah, 33154 Salzkotten (DE); KUBITZA, Boris, 59519 Möhnesee (DE); PLÜMPE, Martin, 33181 Bad Wünnenberg (DE); SPIEGEL, Jeremias, 59555 Lippstadt (DE); VENKER, Udo, 33332 Gütersloh (DE); WILKS, Carsten, 59555 Lippstadt (DE)
(86) International application number: PCT/EP2018/084347
(87) International publication number: WO 2020/119890

(56) References cited:
- WO-A1-2018/167809
- DE-A1- 19 860 676
- US-A1- 2004 178 738
- US-A1- 2014 043 321

## Description

The present invention relates to a method for visualizing different lighting characteristics of a lighting device of a motor vehicle.

During the manufacture of lighting devices for motor vehicles, parameters for controlling the lighting devices may be set with different values. In this way, for example, a glare-free high beam can be set for a drive behind another vehicle or during overtaking another vehicle. The transition from low beam to high beam and vice versa can also be designed differently.

Setting unsuitable values for these parameters can also have a negative effect on the functioning of the lighting device. Inexperienced users can thus unintentionally reduce the quality of the lighting provided by the lighting device.

US 2004/178738 A1 discloses a system for in-situ control of the orientation of a vehicle headlamp equipped with a light source fixed on a mobile reflector, and including a camera mounted in the vehicle, an image processing unit connected to the camera, and a specific light point emission device.

DE 198 60 676 A1 discloses to photograph a scene in front of the vehicle in head lamp illumination area with a camera. A reproduction of at least one photographed scene is reproduced on a playback device. The camera collects data during the journey of the vehicle. The scenes are simulated by the illumination from the headlight and illuminated region is reproduced as the scenes illuminated by the headlight.

US 2014/043321 A1 discloses a computer-implemented method for visualizing an object including the steps of providing a simulated environment; rendering, with at least one processor, at least one virtual object based at least partially on the simulated environment, a viewable angle of the at least one virtual object, and object characteristics associated with the at least one virtual object.

WO 2018/167809 A1 discloses a multifunctional unit for the analysis and calibration of devices and components of a vehicle, comprising a movable trolley of support. Above the trolley there is a base, which carries a screen or panel, at the top of which a video projector is placed, suitable for projection of the calibration panels used in driver assistance systems of vehicles.

Schneider Et Al.: "REDUZIERTER AUFWAND FÜR DYNAMISCHE LICHTFUNKTIONEN", , 28 February 2014 (2014-02-28), pages 43-47, XP093400205 discloses a method for displaying light distributions and determining a C-code for a light controller.

It is an object of the present invention to simplify the setting of suitable values for these parameters.

This object is achieved by a method according to claim 1 and by a system according to claim 10. Embodiments of the invention are specified in the dependent claims. According to claim 1, an initial lighting characteristic is first visualized. This is performed with parameters whose values are variable. The parameters are parameters of the real lighting device. These may, for example, have influence on the size of glare-free areas and/or the dynamic behavior of swivel angles of the light cone. The visualization takes place virtually. Visualization takes place on a display means such as a screen.

A value of at least one of the parameters is then changed. A second lighting characteristic is then visualized with the parameters. The parameters with the changed value are therefore used for the second lighting characteristic. This visualization is also virtual and is performed on the display means.

The first computer-readable instructions are then generated from the parameters. The instructions are designed to cause a controller of the motor vehicle to control the lighting device according to the first or second lighting characteristic.

This allows a user to easily compare two different lighting characteristics with different parameter values. By changing different values of the parameters several times, the user can also gain experience of how the change in values affects the lighting characteristic. The user can then select which lighting characteristic he considers to be most suitable for the vehicle and generate the corresponding first computer-readable instructions, which are then used to control the lighting device in real operation of the vehicle.

The fact that the visualizations take place virtually also makes it easier to try out different values, since it is not always necessary to reprogram a vehicle controller. Nevertheless, the user is presented with a realistic visualization on the basis of which he can select the most suitable values.

The two visualizations are displayed simultaneously. This can be done, for example, on a single display medium. In this way, it is particularly easy to compare the lighting characteristics with each other.

According to an embodiment of the invention, video data can be used for the visualization of the first and the second lighting characteristic. This increases the realism of the visualizations.

According to an embodiment of the invention, the video data can have been recorded with a camera arranged at a video motor vehicle. Additionally or alternatively, the video data can also be generated by simulations using virtual scenes.

According to an embodiment of the invention, data recorded during the operation of the video motor vehicle can be used to visualize the first and second lighting characteristic. For example, the data may have been recorded while the video data was being recorded. In this way, the data can be linked to the video data. The data may, for example, have been recorded by sensors and/or received via a bus system, e.g. CAN bus. The data may include, in particular, values for the parameters of the lighting device. Thus, realistic visualizations for different parameter values can be generated from the data and the video data.

It is also possible that recorded objects in the video data can be faded in and out in the visualizations. These objects can, for example, be detected automatically. These can be houses, trees, people, other vehicles or other objects.

For example, the data and the video data can be output via a function-based interface using an algorithm. This can then be used to calculate target values for controlling the lighting device. These target values can be used for the visualizations.

According to an embodiment of the invention, the lighting device may comprise headlamps. The visualizations of the first and second lighting characteristics can comprise illumination of a roadway in front of the vehicle.

According to an embodiment of the invention, the visualizations of the first and the second lighting characteristic can include a lighting of a wall arranged in front of the vehicle, which can be visualized with an adjustable grade of transparency..

According to an embodiment of the invention, settings of the visualizations of the first and second lighting characteristics can be adjusted. The settings may include, for example, the playback speed and/or playback direction of the video data. For example, the video data can be played faster or slower. The video data can be played forwards or backwards in time. It is also possible to stop the playback of the video data to obtain a still image. The perspective can also be changed. For example, the respective lighting characteristic can be represented in a bird's eye view or in a view from the vehicle.

According to an embodiment of the invention, the values of the parameters can be stored and loaded. This can be done both before and after changing the at least one value. This embodiment has the advantage that different values of the parameters can be set and that, for example, a setting that the user considers to be particularly advantageous is not lost.

According to an embodiment of the invention, the first computer-readable instructions can be transmitted to the controller. In this way, the set values for the parameters in the controller can be used in the real lighting device.

The system of claim 10 comprises a display means, a memory means and a processing means. The display means may, for example, comprise a screen. The memory means may include a digital memory means. The processing means may include, for example, a digital processor. Second computer-readable instructions are stored in the memory means. The processing means is designed to execute the second computer-readable instructions. When executing the second computer-readable instructions, the processing means is caused to perform a method according to an embodiment of the invention. The first and the second lighting characteristics are visualized on the display means.

The invention is explained in more detail below on the basis of the attached drawings.

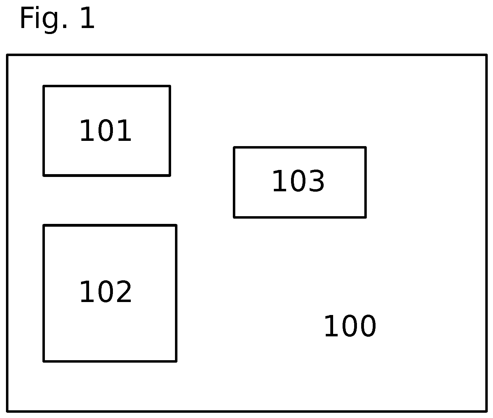

- Fig. 1: shows a schematic view of a system according to an embodiment of the invention.

The system 100 comprises a display means 101, a memory means 102 and a processing means 103. The display means 101 comprises a screen. The memory means 102 is designed as a digital memory medium. The processing means 103 is designed as a digital processor.

Second computer-readable instructions are stored in the memory means 102. When the processing means 103 executes the second computer-readable instructions, it is caused to visualize a first lighting characteristic with parameters of a lighting device of a motor vehicle on the display means 101. This can be done, for example, by playing a video in which the lighting device illuminates a roadway in front of the vehicle. The visualization is therefore virtual.

Video data and parameters are used for the visualization. Both can be output by an algorithm via a function-based interface. This algorithm can be described as a light function algorithm. These data are used to generate target values for controlling the lighting device using a light conversion algorithm. These target values are used for the visualizations.

The values of the parameters are variable. For example, the size and position of glare-free areas can be specified. It is also possible to specify a swivel angle of the light cone in the parameters.

A user has the possibility to change different values of the parameters and to visualize different lighting characteristics. He can also run the visualizations at different speeds, from different perspectives and/or backwards and forwards.

By comparing the lighting characteristics and changing the values of the parameters, a user can easily gain experience with different values of the parameters. It is therefore particularly easy for him to find suitable values for the desired lighting characteristic. The user can also gain experience of the effect of changes in values, so that he can set his preferred values more quickly in future settings.

Once the user has determined which values he considers to be particularly advantageous, he can save the corresponding values and/or generate first computer-readable instructions from the parameters with these values. The first computer-readable instructions can then be transmitted to a controller of a motor vehicle. The controller is designed to control the real lighting device of the motor vehicle according to the set values of the parameters. The user thus obtains a lighting characteristic on the motor vehicle which he has previously selected using system 100.

### reference character list

- 100: System
- 101: Display Means
- 102: Memory Means

## Claims

1. Method for visualizing various lighting characteristics of a lighting device of a motor vehicle, comprising the following steps:
- visualization of a first lighting characteristic with parameters of the lighting device; and then
- changing a value of at least one of the parameters; and then
- visualization of a second lighting characteristic with the parameters, wherein the visualization takes place on a display means, wherein the two visualizations are displayed simultaneously;
- then generating first computer-readable instructions from said parameters, said first computer-readable instructions being adapted to cause a controller of said motor vehicle to control said lighting device in accordance with said first or second lighting characteristic.

2. Method according to claim 1, **characterized in that** video data are used for the visualization of the first and the second lighting characteristic.

3. Method according to the previous claim, **characterized in that** the video data were recorded with a camera arranged on a video motor vehicle.

4. Method according to the previous claim, **characterized in that** data recorded during the operation of the video motor vehicle are used for visualizing the first and second lighting characteristic.

5. Method according to one of the previous claims, **characterized in that** the lighting device comprises headlights and the visualizations of the first and second lighting characteristics comprise illumination of a roadway lying in front of the vehicle.

6. Method according to one of the previous claims, **characterized in that** the lighting device comprises headlights and the visualizations of the first and second lighting characteristics comprises the illumination of a wall arranged in front of the vehicle.

7. Method according to one of the previous claims, **characterized in that** settings of the visualizations of the first and second lighting characteristics are adjustable.

8. Method according to one of the previous claims, **characterized in that** values of the parameters can be stored and loaded.

9. Method according to one of the previous claims, **characterized in that** the first computer-readable instructions are transmitted to the controller.

10. A system (100) comprising display means (101), memory means (102) and processing means (103), wherein second computer-readable instructions are stored in the memory means (102), wherein the processing means (103) is adapted to execute the second computer-readable instructions, and wherein the processing means (103), upon execution of the second computer-readable instructions, is caused to perform a method according to one of the previous claims, wherein the first and second lighting characteristics are visualized on the display means (101).

## Patentansprüche

1. Verfahren zur Visualisierung unterschiedlicher Beleuchtungseigenschaften einer Beleuchtungsvorrichtung eines Kraftfahrzeugs, umfassend die folgenden Schritte:
- Visualisierung einer ersten Beleuchtungseigenschaft mit Parametern der Beleuchtungsvorrichtung; und dann
- Verändern eines Werts wenigstens eines der Parameter; und dann
- Visualisierung einer zweiten Beleuchtungseigenschaft mit den Parametern, wobei die Visualisierung auf einem Anzeigemittel stattfindet, wobei die beiden Visualisierungen gleichzeitig angezeigt werden;
- dann Erzeugen erster rechnerlesbarer Anweisungen aus den Parametern, wobei die ersten rechnerlesbaren Anweisungen dazu geeignet sind, eine Steuerung des Kraftfahrzeugs zu veranlassen, die Beleuchtungsvorrichtung entsprechend der ersten oder zweiten Beleuchtungseigenschaft zu steuern.

2. Verfahren nach Anspruch 1, **dadurch gekennzeichnet, dass** zur Visualisierung der ersten und der zweiten Beleuchtungseigenschaft Videodaten verwendet werden.

3. Verfahren nach dem vorhergehenden Anspruch, **dadurch gekennzeichnet, dass** die Videodaten mit einer an einem Videokraftfahrzeug angeordneten Kamera aufgezeichnet wurden.

4. Verfahren nach dem vorhergehenden Anspruch, **dadurch gekennzeichnet, dass** die während des Betriebs des Videokraftfahrzeugs aufgezeichneten Daten zum Visualisieren der ersten und zweiten Beleuchtungseigenschaft verwendet werden.

5. Verfahren nach einem der vorhergehenden Ansprüche, **dadurch gekennzeichnet, dass** die Beleuchtungsvorrichtung Scheinwerfer umfasst und die Visualisierungen der ersten und zweiten Beleuchtungseigenschaft die Ausleuchtung einer vor dem Fahrzeug liegenden Fahrbahn umfassen.

6. Verfahren nach einem der vorhergehenden Ansprüche, **dadurch gekennzeichnet, dass** die Beleuchtungsvorrichtung Scheinwerfer umfasst und die Visualisierungen der ersten und zweiten Beleuchtungseigenschaft die Ausleuchtung einer vor dem Fahrzeug angeordneten Mauer umfassen.

7. Verfahren nach einem der vorhergehenden Ansprüche, **dadurch gekennzeichnet, dass** Einstellungen der Visualisierungen der ersten und zweiten Beleuchtungseigenschaft einstellbar sind.

8. Verfahren nach einem der vorhergehenden Ansprüche, **dadurch gekennzeichnet, dass** Werte der Parameter gespeichert und geladen werden können.

9. Verfahren nach einem der vorhergehenden Ansprüche, **dadurch gekennzeichnet, dass** die ersten rechnerlesbaren Anweisungen an die Steuerung übertragen werden.

10. System (100), umfassend ein Anzeigemittel (101), ein Speichermittel (102) und ein Verarbeitungsmittel (103), wobei zweite rechnerlesbare Anweisungen in dem Speichermittel (102) gespeichert sind, wobei das Verarbeitungsmittel (103) dazu geeignet ist, die zweiten rechnerlesbaren Anweisungen auszuführen, und wobei das Verarbeitungsmittel (103), bei Ausführung der zweiten rechnerlesbaren Anweisungen, veranlasst wird, ein Verfahren nach einem der vorhergehenden Ansprüche auszuführen, wobei die erste und zweite Beleuchtungseigenschaft auf dem Anzeigemittel (101) visualisiert werden.

## Revendications

1. Procédé de visualisation de diverses caractéristiques d'éclairage d'un dispositif d'éclairage d'un véhicule automobile, comprenant les étapes suivantes :
- Visualisation d'une première caractéristique d'éclairage avec les paramètres du dispositif d'éclairage ; puis
- Modification d'une valeur d'au moins l'un des paramètres ; puis
- Visualisation d'une deuxième caractéristique d'éclairage avec les paramètres, la visualisation s'effectuant sur un moyen d'affichage et les deux visualisations étant affichées simultanément ;
- Puis, génération de premières instructions lisibles par ordinateur à partir desdits paramètres, lesdites premières instructions lisibles par ordinateur étant adaptées pour amener un contrôleur dudit véhicule automobile à commander ledit dispositif d'éclairage conformément à ladite première ou deuxième caractéristique d'éclairage.

2. Procédé selon la revendication 1 **caractérisé en ce que** des données vidéo sont utilisées pour la visualisation de la première et deuxième caractéristique d'éclairage.

3. Procédé selon la revendication précédente **caractérisé en ce que** les données vidéo ont été enregistrées par une caméra montée sur un véhicule automobile de tournage vidéo.

4. Procédé selon la revendication précédente **caractérisé en ce que** des données enregistrées pendant le fonctionnement du véhicule automobile de tournage vidéo sont utilisées pour visualiser les première et deuxième caractéristique d'éclairage.

5. Procédé selon l'une des revendications précédentes **caractérisé en ce que** le dispositif d'éclairage comporte des phares et **en ce que** les visualisations des première et deuxième caractéristique d'éclairage comprennent l'éclairage d'une chaussée située devant le véhicule.

6. Procédé selon l'une des revendications précédentes **caractérisé en ce que** le dispositif d'éclairage comporte des phares et **en ce que** les visualisations des première et deuxième caractéristique d'éclairage comprennent l'éclairage d'un mur situé devant le véhicule.

7. Procédé selon l'une des revendications précédentes **caractérisé en ce que** les réglages des visualisations des première et deuxième caractéristique d'éclairage peuvent être adaptés.

8. Procédé selon l'une des revendications précédentes **caractérisé en ce que** les valeurs des paramètres peuvent être enregistrées et chargées.

9. Procédé selon l'une des revendications précédentes **caractérisé en ce que** les premières instructions lisibles par ordinateur sont transmises au contrôleur.

10. Système (100) comprenant un moyen d'affichage (101), un moyen de mémoire (102) et un moyen de traitement (103) **caractérisé en ce que** les deuxièmes instructions lisibles par ordinateur sont stockées dans le moyen de mémoire (102), le moyen de traitement (103) étant adapté pour exécuter les deuxièmes instructions lisibles par ordinateur et **caractérisé en ce que** le moyen de traitement (103), lors de l'exécution des deuxièmes instructions lisibles par ordinateur, est amené à exécuter un procédé selon l'une des revendications précédentes, les première et deuxième caractéristique d'éclairage étant visualisées sur le moyen d'affichage (101).
